# EUROPÄISCHE PATENTSCHRIFT

(11) **EP 2 052 885 B1**
(45) Veröffentlichungstag und Bekanntmachung des Hinweises auf die Patenterteilung: **23.01.2019**
(21) Anmeldenummer: 08018573.9
(22) Anmeldetag: 23.10.2008
(51) Int. Cl.: B60G 17/016, B60G 17/0165, B60G 17/018, B60G 17/06, B60W 40/10, B60W 40/06, B60W 10/22

(54) **Verfahren und System zur Beeinflussung der Bewegung eines in seinen Bewegungsabläufen steuerbaren oder regelbaren Fahrzeugaufbaus eines Kraftfahrzeuges und Fahrzeug**
Method and system for affecting the movement of a vehicle structure on a powered vehicle and vehicle controlled or regulated by its movement processes
Procédé et système destinés à influencer le mouvement d'une caisse d'un véhicule automobile ou d'un véhicule, pouvant être commandée ou réglée dans ses déroulements de mouvements

(30) Priorität: 26.10.2007 DE 102007051214; 26.10.2007 DE 102007051216
(43) Veröffentlichungstag der Anmeldung: 29.04.2009
(73) Patentinhaber: Volkswagen Aktiengesellschaft, 38440 Wolfsburg (DE)
(72) Erfinder: Arenz, Andrea, Dr., 38458 Velpke (DE)

(56) Entgegenhaltungen:
- WO-A1-91/00188
- WO-A1-91/19261
- DE-A1- 3 918 735
- DE-A1- 4 219 012
- DE-A1-102004 024 951
- DE-A1-102005 014 237
- DE-C1- 10 246 093
- US-A- 4 749 210
- US-A- 5 071 157

## Beschreibung

Die Erfindung betrifft ein Verfahren zur Erzeugung von Signalen zur Beeinflussung der Bewegung eines in seinen Bewegungsabläufen steuerbaren oder regelbaren Fahrzeugaufbaus eines Kraftfahrzeuges, wobei sensorisch die Bewegung des Fahrzeugaufbaus ermittelt wird, die den ermittelten Sensorwerten entsprechenden Sensorsignale einem Dämpferregler zugeführt werden, der Dämpferregler wenigstens ein Steuersignal zur Ansteuerung von Aktuatoren, insbesondere von semi-aktiven oder aktiven Dämpfern, liefert, mittels denen die Bewegung des Fahrzeugaufbaus beeinflusst werden kann. Die Erfindung betrifft ferner ein System zur Durchführung des Verfahrens und ein Fahrzeug, insbesondere Kraftfahrzeug, mit einem System zur Beeinflussung der Bewegung eines in seinen Bewegungsabläufen steuerbaren oder regelbaren Fahrzeugaufbaus.

Verfahren und Systeme der gattungsgemäßen Art sind bekannt. So ist beispielsweise aus DE 39 18 735 A1 ein Verfahren und eine Vorrichtung zur Dämpfung von Bewegungsabläufen an Fahrwerken von Personen- und Nutzkraftfahrzeugen bekannt, bei denen aus einer sensorisch ermittelten Bewegung zweier Fahrzeugmassen mittels einer Signalverarbeitungsschaltung ein Steuersignal für einen steuerbaren, an den Fahrzeugmassen angreifenden Aktuator gebildet wird. Für eine komfortable und dennoch sichere Fahrwerkabstimmung ist vorgesehen, die sensorisch ermittelten Signale über eine der Signalverarbeitungsschaltung angehörenden Schaltungsanordnung mit frequenzabhängigem Übertragungsverhalten zu leiten. Hierdurch soll erreicht werden, dass aufgrund der frequenzabhängigen Verarbeitung der Sensorsignale keine statische Kennlinie für die Aktuatorsteuerung beziehungsweise Aktuatorregelung eingesetzt wird, sondern eine von dem Frequenzinhalt des Bewegungsablaufs abhängige Aktuatorsteuerung beziehungsweise Aktuatorregelung erfolgt. Hierdurch soll das Ziel eines möglichst hohen Fahrkomforts bei einer auch in Grenzbereichen des Fahrzustandes sicheren Auslegung des Fahrwerks erzielt werden. Diesem Ansatz liegt der Gedanke zugrunde, dass dem Zielkonflikt zwischen gewünschtem Fahrkomfort, das heißt komfortable und weiche Auslegung, und Fahrdynamik, das heißt sportliche und straffe Abstimmung, einerseits und einer ausreichenden Fahrsicherheit andererseits entsprochen werden soll. Für Fahrkomfort und Fahrdynamik ist eine Dämpfung der Bewegung des Aufbaus entscheidend, während für eine Fahrsicherheit eine Radlast beziehungsweise Radlastschwankung entscheidend ist.

Bekannt sind im Wesentlichen drei Dämpfersysteme für Fahrzeuge, wobei einer Federanordnung zwischen Rad und Aufbau ein Aktuator parallel geschaltet ist. Bekannt sind passive, semi-aktive und aktive Dämpfersysteme. Bei passiven Dämpfersystemen ist eine Veränderung der Dämpferkraft während des Fahrbetriebes nicht vorgesehen. Bei semi-aktiven Dämpfersystemen kann die Dämpferkraft durch eine Veränderung eines Ölfluidstromes unter Verwendung eines oder mehrerer Ventile verändert werden. Auf diese Art und Weise können die Dämpfungseigenschaften verändert werden. Semi-aktive Dämpfersysteme arbeiten rein energieabsorbierend. Bei aktiven Dämpfersystemen kann eine gewünschte Dämpferkraft sowohl dämpfend als auch energieeinbringend in jede Richtung bereitgestellt werden.

Bei den bekannten Verfahren und Systemen zur Beeinflussung der Bewegung des Fahrwerkes ist nachteilig, dass als Ausgangsgröße aus eingesetzten Reglermodulen eine Kraft angefordert wird. Dies hat den Nachteil, dass zusätzlich eine Dämpfergeschwindigkeit als Zusatzgröße benötigt wird, um über eine Kennfeldumrechnung zu der eigentlichen Stellgröße, dem Steuerstrom, zu gelangen. Darüber hinaus kann auch bei einer konstanten Kraftanforderung der Strom sich in Abhängigkeit von der Dämpfergeschwindigkeit ändern. Da eine Kennfeldumrechnung fehlerbehaftet ist, wird auch die resultierende Dämpferkraft entsprechend unstetig. Gerade im Bereich von niedrigen Dämpfergeschwindigkeiten, die insbesondere häufig bei Querdynamikvorgängen vorliegen, ist dies nachteilig, da hier die größten Nichtlinearitäten und Ungenauigkeiten im Kennfeld vorliegen. Darüber hinaus ist bekannt, dass im Geschwindigkeitsnulldurchgang im Kennfeld der Dämpfer in der Regel weich gestellt wird. Gerade bei Dämpfergeschwindigkeiten, die um null herum pendeln wird dann bei einer konstanten Kraftanforderung ein ständig pendelnder Strom gestellt, der kontraproduktiv für die eigentliche Regelung ist.

Bei Fahrzeugen werden zur Bestimmung der Vertikalbewegungen meist Beschleunigungssensoren zur Detektion sowohl der Aufbau- als auch der Radbewegung eingesetzt und Wegsensoren/Drehwinkelsensoren zur Bestimmung der Relativbewegung zwischen Aufbau und Rad. Aus den Sensorgrößen können dann in nachfolgenden Berechnungsverfahren die Geschwindigkeitsgrößen über Integratoren oder Differenzierer bestimmt werden oder aber auch berechnet werden über mathematische Verfahren der Integral- oder der Differentialrechnung. Ein derartiges Verfahren ist beispielsweise aus DE 10 2004 024 951 A1 bekannt.

Für den Einsatz von Regelungen werden meist Signale zum Beispiel in der Form von Weg-, Beschleunigungs- und auch Geschwindigkeitsgrößen benötigt. Die Regelung von elektronischen Schwingungsdämpfern basiert häufig auf der Verwendung von Geschwindigkeiten des Aufbaus und des Rads oder der Relativgeschwindigkeit zwischen diesen Körpern beziehungsweise der Relativgeschwindigkeit des Dämpfers.

Bei der Geschwindigkeitsmessung wird mit Hilfe einer technischen Einrichtung bestimmt, welchen Weg ein Objekt innerhalb einer festgelegten Zeit zurückgelegt hat bzw. welche Zeit ein Objekt für die Zurücklegung des Weges benötigt hat.

Filter dienen zur Veränderung der Amplituden von elektrischen Signalen abhängig von ihrer Frequenz. Beispielsweise können Signalanteile, die die weitere Verarbeitung stören, abgeschwächt werden. Filter im klassischen Sinne, wie Tief- oder Hochpass, verändern den Frequenzgang. Schaltungen und Verfahren, die komplexere Eigenschaften wie Phasenlage, Impedanz und Rauschanteile verändern, werden auch unter dem Begriff Filter zusammengefasst.

Die theoretischen Standardfälle des Selektionsverhaltens eines Filters sind: Ein Tiefpassfilter schwächt die hohen Frequenzen bis zu einer Grenzfrequenz und lässt alle tieferen Frequenzen praktisch ohne Abschwächung (Verstärkung = 1) passieren.

Anwendung findet dieser "Tiefpass" zum Beispiel zur Rauschunterdrückung. Ein Hochpassfilter schwächt die tiefen Frequenzen bis zu einer Grenzfrequenz, während alle höheren Frequenzen (mit der Verstärkung 1) durchgelassen werden. Mit diesem "Hochpass" lässt sich langsames Driften im Signal unterdrücken. Ein Bandpassfilter schwächt alle Frequenzen außerhalb eines Frequenzintervalls ab, das durch zwei Grenzfrequenzen festgelegt ist. Amplituden- oder frequenzmodulierte Signale tragen den Hauptanteil ihrer Information in einem begrenzten Frequenzband. Ein Bandpass lässt diesen Anteil aus Frequenzgemischen passieren und sperrt die Anteile unterhalb und oberhalb der Grenzfrequenzen. Ein Bandstoppfilter stellt die Umkehrung des Bandfilters dar. Ein Allpassfilter lässt alle Frequenzen bei gleicher Verstärkung zum Ausgang durch. Der Idealfall einer rechteckigen bzw. stufenförmigen Übertragungsfunktion lässt sich in der Praxis allerdings nicht erreichen.

Bei einem linearen Filter sind die Eigenschaften der Filterung unabhängig vom Signalpegel. Das Signal wird nicht verzerrt. Wenn man das Eingangssignal für eine bestimmte Frequenz um einen Faktor a vergrößert, so ist auch das Ausgangssignal für diese Frequenz entsprechend vergrößert. Die Form des Signals wird dabei nicht grundlegend verändert. Tiefpass, Hochpass, Bandpass, Bandsperre und Allpass werden als lineare Filter bezeichnet. Es sind aber auch wesentlich komplexere lineare Filter bekannt.

Bei der Entwicklung eines Konzeptes für ein Regelungssystem werden bestimmte Ziele und Strategien festgelegt, um diese Ziele zu erreichen. Um zum Beispiel die Bewegung des Aufbaus eines Fahrzeugs zu dämpfen, kann man das Ziel festlegen, dass die auf den Aufbau wirkende Kraft durch entsprechende Gegenkräfte aufgehoben oder minimiert werden soll. Da die von einem Dämpfer oder semi-aktiven Dämpfer ausgeübten Kräfte von der Relativgeschwindigkeit des Kolbens im Dämpfer abhängen, hängt in diesem Fall das Eingangssignal des Regelungssystems von der Relativgeschwindigkeit des Dämpfers ab. Hat man dagegen das Ziel, dass das Regelungssystem die (vertikale) Geschwindigkeit des Aufbaus herunter regeln soll, so hängt das Eingangssignal des Regelungssystems von der vertikalen Geschwindigkeit des Aufbaus ab. Verfolgt man das Ziel, die von der Bewegung des Rades auf den Aufbau zu übertragenden Kräfte möglichst gering zu halten, so wird man den steuerbaren Dämpfer beim Auftreten dieser Kräfte möglichst weich einstellen, um diese Kräfte möglichst nicht über den Dämpfer auf den Aufbau zu übertragen. Entsprechendes gilt beim plötzlichen Auftreten von Hindernissen auf der Straße. Auch in diesem Fall soll der Dämpfer weich eingestellt bleiben, um diese Kräfte möglichst vom Aufbau fern zu halten.

Üblicherweise wird man versuchen, den Regler des Systems derart aufzubauen, dass mit seiner Hilfe die ins Auge gefassten Ziele möglichst gut erreicht werden. Nachteilig dabei ist allerdings, dass der Aufbau des Reglers hierdurch sehr aufwändig und kompliziert wird und die Handhabung seiner Einstellungen wenig transparent ist, da die einzelnen Einstellungen gegenseitig Auswirkungen aufeinander haben.

Die Bestimmung der Relativgeschwindigkeit vrel (oder vD) eines Dämpfers ist wesentlich für die Bestimmung der durch den Dämpfer zwischen Aufbau und Rad ausgeübten Kraft, da diese Kraft im Wesentlichen von der Relativgeschwindigkeit des Dämpfers abhängt. An sich stehen für die Bestimmung von Geschwindigkeiten eine erhebliche Anzahl unterschiedlicher Typen von Sensoren zur Verfügung. Diese Sensoren sind allerdings aus wirtschaftlichen (Kosten) und technischen (Platz, Machbarkeit) Gründen in der Regel für die Bestimmung der Relativgeschwindigkeit eines Dämpfers nicht geeignet. Andererseits besitzen Fahrzeuge in der Regel Sensoren zur Bestimmung des Abstandes zwischen Rad und Aufbau, wie Sie beispielsweise für die Niveau-Regelung benötigt werden. Es bietet sich daher an, derartige Weg-Sensoren für die Bestimmung der Relativgeschwindigkeit des Dämpfers mit auszunutzen. Hierbei ergeben sich allerdings eine Reihe von Schwierigkeiten, wenn von dem gemessenen Weg strecken auf die Relativgeschwindigkeit des Dämpfers geschlossen werden soll.

Um beste Messergebnisse zu erzielen, müsste der Weg-Sensor direkt an den jeweiligen Dämpfer angeordnet sein. Da dies aus den genannten Gründen aber nicht möglich ist, müssen die Ergebnisse des entfernt angeordneten Sensors auf die Lage des Dämpfers umgerechnet werden. Hierbei sind aber nicht nur die geometrischen Verhältnisse zu berücksichtigen, sondern auch die Tatsache, dass auf der Strecke zwischen dem Messort und dem Dämpfer viele Nichtlinearitäten und Zeitelemente wie beispielsweise elastische Dämpferlager, Achsenelastizitäten, auftreten, die bei der Bewertung der Relativgeschwindigkeit des Dämpfers zu berücksichtigen sind. Entsprechendes gilt für den Aufbau des Dämpfers selbst, der ebenfalls in gewissem Umfang elastisch ist, so dass die Kraft, die der Dämpfer aufbringt, erst nach einer Totzeit und Zeitverzögerungen auftritt. Bei einer genaueren Bestimmung der durch den Dämpfer ausgeübten Kraft ist es daher notwendig das Zeitverhalten des Dämpfers zu berücksichtigen, da ja die Geschwindigkeit des Dämpfers sich geändert haben wird, wenn der Dämpfer schließlich auf die errechnete Stellgröße reagiert.

Eine optimale Einstellung eines Reglers ist theoretisch zwar denkbar, in der Praxis aber recht kompliziert und unübersichtlich, da die einzelnen einzustellenden Größen zum Teil miteinander korrelieren.

DE 10 2005 014 237 A1, US 4,749,210 A, US 5,071,157 A und WO 91/00188 A1 offenbaren Verfahren und Systeme zur Beeinflussung der Bewegung eines in seinen Bewegungsabläufen steuerbaren oder regelbaren Fahrzeugaufbau eines Kraftfahrzeuges. Es ist vorgesehen, dass die Bewegung des Fahrzeugaufbaus sensorisch ermittelt wird und die hieraus resultierenden Sensorsignale, bevor sie einem Dämpferregler zugeführt werden, gefiltert werden.

Der Erfindung liegt daher die Aufgabe zugrunde, ein Verfahren und ein System der gattungsgemäßen Art anzugeben, mittels denen in einfacher und sicherer Weise eine Regelung der Bewegung eines Fahrzeugaufbaus mit elektronisch ansteuerbaren Aktuatoren (Dämpfern) unter Berücksichtigung der Regelungsziele möglich ist.

Erfindungsgemäß wird diese Aufgabe durch ein Verfahren mit den in Anspruch 1 genannten Merkmalen gelöst. Dadurch, dass die Sensorsignale in Abhängigkeit einer gewünschten Bewegungscharakteristik des Fahrzeugaufbaus vorverarbeitet werden und die vorverarbeiteten Sensorsignale dem Dämpfungsregler zugeführt werden, wobei nicht regelungsrelevante Signalinformationen und/oder Signalbearbeitungen herausgefiltert werden, ist vorteilhaft möglich, zumindest einen Teil der Signalverarbeitung in eine Vorverarbeitung der Signale zu verlagern, um den Dämpferregler nicht mit Aufgaben der Signalverarbeitung zu überfrachten. Durch diese Entkopplung der Signalverarbeitung erhält der Regler einen vergleichsweise einfachen Aufbau und das Regelungssystem wird erheblich übersichtlicher und lässt sich einfacher an unterschiedliche Umgebungen anpassen. Der Dämpferregler ist somit modular aufgebaut, wobei die Vorverarbeitung in einem eigenen Modul des Dämpferreglers verlagert werden kann.

Gemäß der Erfindung ist vorgesehen, dass die Filter mit Differenzierer oder Integrator oder die kombinierten Differenzierer-Filter und/oder Integratorfilter Signale ausprägen, die in definierbaren Frequenzen Phasenverschiebungen in Form von Phasenvor- oder Phasennacheilen gegenüber dem Eingangssignal aufweisen. Der Vorteil besteht darin, dass die in einem erwünschten Frequenzbereich liegenden Signale in ihrer Phase derart verschoben werden können, dass der Zeitpunkt des Beginns und/oder des Endes der Wirkung dieses Signals im Regler eingestellt werden kann.

Bei der Lösung der Aufgabe macht sich die Erfindung die Tatsache zu Nutze, dass die Bewegungen der einzelnen Baugruppen, die miteinander wirken und deren Bewegungen durch das Regelungssystem unterschiedlich behandelt werden sollen, in der Regel sich durch unterschiedliche Frequenzen, Amplituden und Phasen voneinander unterscheiden. Die vorliegende Erfindung nutzt daher auf diese Parameter reagierende Filter, um die Eingangssignale entsprechend den Regelungszielen zu bearbeiten, bevor sie zu dem Eingang des Reglers gelangen. Durch diese Maßnahmen sind die Eingangssignale schon weitgehend an die Regelungsziele angepasst und lassen daher eine sehr viel empfindlichere Einstellung und Wirkung des Reglers zu, da er nicht durch Signale belastet wird, die das System praktisch nicht verwirklichen kann oder verwirklichen soll.

In bevorzugter Ausgestaltung der Erfindung ist vorgesehen, dass das Sensorsignal differenziert wird und dann als Eingangssignal am Dämpferregler zur Verfügung steht. Eine Differentiation ist beispielsweise erforderlich, wenn der Sensor ein Signal ausgibt, welches erst durch Differenzierung beziehungsweise Ableitung dem gewünschten Eingangssignal entspricht. So sind beispielsweise Sensoren für die Messung von Wegen im Handel preiswert erhältlich. Will man dagegen als Eingangssignal die Geschwindigkeit eines Körpers angeben, so muss das Ausgangssignal dieses Sensors erst differenziert werden. Bei dieser Fallgestaltung ist daher günstig, wenn ein Differenzierer gleichzeitig mit in die Vorverarbeitung aufgenommen wird. Für die Erfindung zwingend ist dies nicht. So kann in weiterer bevorzugter Ausgestaltung vorgesehen sein, dass Sensorsignal zu integrieren oder direkt zu bearbeiten, ohne dass es vorher integriert oder differenziert werden muss. Für die Erfindung besonders wichtig ist daher, dass für die Bearbeitung der Eingangssignale des Reglers wesentliche Elemente in eine Vorverarbeitung verlegt werden, welche mit Filtern versehen ist. Das gilt insbesondere für Regelungssysteme zur Regelung der Dämpfung eines Fahrzeugs über die Relativgeschwindigkeit des Dämpfers.

Ferner ist in bevorzugter Ausgestaltung der Erfindung vorgesehen, dass das Sensorsignal integriert wird und dann als Eingangssignal am Dämpferregler zur Verfügung steht. Eine Integration ist beispielsweise erforderlich, wenn der Sensor ein Signal ausgibt, welches erst durch Integration dem gewünschten Eingangssignal entspricht. So sind beispielsweise Sensoren für die Messung von Beschleunigungen im Handel preiswert erhältlich. Will man dagegen als Eingangssignal die Geschwindigkeit eines Körpers angeben, so muss das Ausgangssignal dieses Sensors erst integriert werden. Bei dieser Fallgestaltung ist daher günstig, wenn ein Integrator gleichzeitig mit in die Vorverarbeitung aufgenommen wird.

Ein Differential beschreibt die Änderung einer Funktion im Bereich eines Messpunktes und bildet somit die Ableitung dieser Funktion. So beschreibt beispielsweise die Geschwindigkeit die innerhalb bestimmter Zeitabschnitte zurückgelegten Wegstrecken. Das Integral ist eine lineare Abbildung, die einer Funktion auf einem gegebenen Integrationsbereich einen Zahlwert zuordnet. Integratoren und Differenzierer können nicht nur in Form von Hardware, zum Beispiel über frequenzabhängige Bauteile wie Operationsverstärker wirksam sein, sondern auch in Form von Software über mathematischen Funktionen abgebildet werden.

Schaltungen und Verfahren, die komplexere Eigenschaften wie Frequenzgang (Amplituden- und Phasenlage), Impedanz und Rauschanteile verändern, werden unter dem Begriff Filter zusammengefasst. Eigentliche Differenzierer beziehungsweise Integratoren sind aus dem Stand der Technik bekannt.

Vorgeschlagen wird, die Verfahren zur Signalaufbereitung in Form von Filterstrukturen zu realisieren.

Für eine Ermittlung eines Geschwindigkeitssignals aus einem Wegsignal bestehen verschiedene Möglichkeiten, Filter und Differenzierer miteinander zu koppeln, soweit ein Differenzierer überhaupt benötigt wird. Zum einen kann ein Kombinations-Differenzierer-Filter verwendet werden, zum anderen kann der Differenzierer durch vorgeschaltete und/oder nachgeschaltete Filterstrukturen ergänzt werden. Ebenfalls ist es möglich, Umrechnungen, wie beispielsweise Koordinatentransformationen (polare Koordinaten in kartesische Koordinaten und so weiter), in diese Gesamtstruktur einzubinden.

Für eine Ermittlung eines Geschwindigkeitssignals aus einem Beschleunigungssignal bestehen verschiedene Möglichkeiten, Filter und Integrator miteinander zu koppeln, soweit ein Integrator überhaupt benötigt wird. Zum einen kann ein Kombinations-Integrations-Filter verwendet werden, zum anderen kann der Integrator durch vorgeschaltete und/oder nachgeschaltete Filterstrukturen ergänzt werden. Ebenfalls ist es möglich, Umrechnungen, wie beispielsweise Koordinatentransformationen, in diese Gesamtstruktur einzubinden.

Die genannten Baugruppen können das Eingangssignal in vielfältiger Weise beeinflussen. So kann beispielsweise ein bestimmtes Frequenzband des Eingangssignals herausgefiltert oder die betreffenden Amplituden geschwächt werden, wodurch sich das Übertragungsverhalten ändert. Es kann aber auch die Phasenlage des Signals oder eines abgeleiteten Signals verändert und damit der Beginn des Signals vorverlegt oder auf einen späteren Zeitpunkt verschoben werden.

Das erfindungsgemäße Verfahren ist vorteilhaft geeignet, das Regelungssystem und damit den nachgeschalteten Regler in einfacher Weise an Kundenwünsche anzupassen. Soll zum Beispiel bei einer geregelten Dämpfung das System an eine sportliche Fahrweise angepasst werden, so wird man den einstellbaren Dämpfer schon bei niedrigeren Amplituden härter einstellen. Auf diese Weise wird zwar die Bewegung des Aufbaus stärker gedämpft, gleichzeitig sind aber auch die von der Straße auf den Aufbau ausgeübten Kräfte stärker spürbar. Umgekehrt soll bei einem an eine komfortable Fahrweise angepassten System der Dämpfer erst bei größeren Amplituden härter, und damit stärker dämpfend, eingestellt werden. Dies kann man mittels der Erfindung in einfacher Weise dadurch erreichen, dass man in den betreffenden Frequenzbereichen die Höhe der Amplituden abschwächt.

In bevorzugter Ausgestaltung der Erfindung ist vorgesehen, spezifische Eigenschaften und Regleranforderungen in den vorverarbeitenden Filter-Block zu verlegen. So ist es beispielsweise eine Anforderung an den Regler, sehr hohe Frequenzen stark abzuschwächen, da diese von dem nachgeschalteten Dämpfer als Aktor ohnedies nicht gestellt werden können.

Eine spezifische Eigenschaft des mittels eines Geschwindigkeitssignals angesteuerten Reglers ist es, dass bei einem sich nur sehr langsam ändernden Wegsignal sich nur verschwindend geringe und/oder stationäre Geschwindigkeitssignale durch die Differenzierung ergeben, die von dem Dämpfer als Aktor entweder nicht gestellt werden können oder gestellt werden sollen, da ein semi-aktiver Dämpfer bei einer sehr niedrigen Relativgeschwindigkeit sowieso kaum Kräfte auszuüben vermag. Das ändert nichts daran, dass derartige gemessene stationäre Wegstrecken zum Beispiel für die Niveauregelung sehr wichtig sind, zum Beispiel für die Gewichtsverteilung auf die Achsen bei Bergfahrt. Diese beispielhaften Fallgestaltungen können somit zu unerwünschten Einstellungen des Dämpfers führen und sind durch entsprechende Ausgestaltungen der Filter schon im Vorfeld zu eliminieren, ohne dass sie eine Wirkung auf den Regler ausüben und diesen gegenüber gewünschtem Regelungsverhalten unempfindlicher machen.

Eine spezifische Eigenschaft des mittels eines Beschleunigungssignals angesteuerten Reglers ist es, dass bei einem konstanten Beschleunigungssignal, etwa wegen eines Offsets des Signals am Sensorausgang oder wegen der Bergfahrt eines Fahrzeugs, das durch Integration erhaltene Geschwindigkeitssignal ständig ansteigt und damit den Dämpfer immer härter stellt, obwohl in diesen Fällen der Dämpfer weich eingestellt bleiben soll. Analog kann eine kurzfristige Beschleunigung durch die Integration zu einem konstanten Geschwindigkeitssignal führen, obwohl in diesem Fall der Regler ebenfalls kein Steuersignal liefern soll. Diese beispielhaften Fallgestaltungen können somit zu unerwünschten Einstellungen des Dämpfers führen und sind durch entsprechende Ausgestaltungen der Filter schon im Vorfeld zu eliminieren, ohne dass sie eine Wirkung auf den Regler ausüben und diesen gegenüber gewünschtem Regelungsverhalten unempfindlicher machen.

In weiterer bevorzugter Ausgestaltung der Erfindung ist vorgesehen, dass Parameter berücksichtigt werden, mit deren Hilfe Teile des Eingangssignals eliminiert werden, welche durch den Aktor beziehungsweise Dämpfer des nachgeschalteten Regelungssystems ohnedies nicht bedient werden können und die den Regler nur belasten. Dabei kann es sich zum Beispiel um hohe Frequenzen handeln, für die der Dämpfer zu träge reagiert. Weiterhin können stationäre oder quasi-stationäre Signale eliminiert werden, da ein nicht aktiver oder semi-aktiver Dämpfer nur dann Kräfte aufbringen kann, wenn der Dämpfer eine Relativgeschwindigkeit hat. Weiterhin sind Signale zu vermeiden, welche den Dämpfer an die Grenze seiner Belastbarkeit bringen und somit beschädigen können.

Ferner ist in bevorzugter Ausgestaltung der Erfindung vorgesehen, dass die Filter mit Differenzierer oder Integrator oder die kombinierten Differenzierer-Filter und/oder Integratorfilter Signale ausprägen, die in definierbaren Frequenzen Phasenverschiebungen in Form von Phasenvor- oder Phasennacheilen gegenüber dem Eingangssignal aufweisen. Der Vorteil besteht darin, dass die in einem erwünschten Frequenzbereich liegenden Signale in ihrer Phase derart verschoben werden können, dass der Zeitpunkt des Beginns und/oder des Endes der Wirkung dieses Signals im Regler eingestellt werden kann.

Will man bei einer Dämpfungsregelung des Aufbaus eines Fahrzeugs die Bewegung des Aufbaus dämpfen, ist in weiterer bevorzugter Ausgestaltung der Erfindung vorgesehen, dass die Filter mit Differenzierer und/oder Integrator oder die kombinierten Differenzierer-Filter und/oder Integratorfilter Signale ausprägen, die vorwiegend Anteile aus dem Aufbau- und/oder Aktor-Frequenzbereich enthalten. Dabei wird vorausgesetzt, dass in den anderen Frequenzbereichen relevante Bewegungen anderer Baugruppen nicht oder weniger gedämpft werden sollen. Der Grundgedanke dabei ist, dass die in den Dämpfer eingebrachte und zu Eigenschwingungen des Dämpfers beziehungsweise Aktors führende Energie durch eine härtere Einstellung des Dämpfers gedämpft werden soll, damit diese Bewegungen im Aufbau wenig spürbar sind und nur geringfügig Energie in den Aufbau einbringen.

Um die genannten Zeitverzögerungen oder Totzeiten ausgleichen zu können, ist erfindungsgemäß vorgesehen, dass die Filter mit Differenzierer und/oder Integrator oder die kombinierten Differenzierer-Filter und/oder Integratorfilter Signale ausprägen, die einen definierbaren Phasenvorhalt aufweisen, somit das Geschwindigkeitssignal zeitlich früher einsetzt und auf diese Weise zum Beispiel das Zeitverhalten des Aktors berücksichtigt oder im Geschwindigkeitssignale nachgebildet wird. Durch die Filter wird damit bewirkt, dass die aus den differenzierten Weg-Signalen abgeleiteten Geschwindigkeitssignale in ihrer Phase vorverlegt werden, so dass die zeitliche Übereinstimmung der Relativgeschwindigkeit des Dämpfers und dem das Stellglied ansteuernden Steuersignal des Reglers verbessert wird.

In weiterer bevorzugter Ausgestaltung der Erfindung ist vorgesehen, durch Differenzieren die Phase der Aufbau-Eigenfrequenzen derart zu verschieben, dass das Eingangssignal, insbesondere das Geschwindigkeitssignal, früher einsetzt, wodurch die Regelung dieses Signals eher beginnen kann. Auf diese Weise lassen sich zum Beispiel die Trägheit des Dämpfers oder andere Zeitverzüge näherungsweise berücksichtigen und ihre Auswirkungen können minimiert werden.

Darüber hinaus ist in bevorzugter Ausgestaltung der Erfindung vorgesehen, nicht nur eine definierbare Phasenkorrektur auszuführen, sondern statt dessen oder zusätzlich eine AmplitudenKorrektur zu bewirken, wodurch das abgeleitete Geschwindigkeitssignal in geeigneter Weise zeitlich versetzt einsetzt und in seiner Amplitude derart korrigiert ist, dass Nichtlinearitäten und/oder Zeitverzüge aufgrund des Messverfahrens oder des Verhaltens des Dämpfers in ihren Auswirkungen minimiert werden.

Erfindungsgemäß ist ferner vorgesehen, bestimmte Frequenzbereiche zu eliminieren oder zumindest doch hinsichtlich der Höhe ihrer Amplituden stark zu mindern. Der Grundgedanke dabei ist, dass Frequenzen von dem Dämpfer fern gehalten werden sollen, die er ohnedies nicht stellen kann oder soll. Dies gilt beispielsweise bevorzugt für hohe Frequenzen, die weit über den Eigenfrequenzen des Dämpfers liegen oder für Motorschwingungen oder besonders bevorzugt für Eigenfrequenzen der Räder.

Vielfach ist es schwierig, bestimmte Frequenzbänder stark zu dämpfen, ohne gleichzeitig die Phasenlage der hinsichtlich der Frequenzen benachbarten Bereiche erheblich zu ändern. In diesem Fall ist in bevorzugter Ausgestaltung der Erfindung vorgesehen, dass die Filter mit Differenzierer und/oder Integrator oder die kombinierten Differenzierer-Filter und/oder Integratorfilter Signale ausprägen, die nur sehr geringe Anteile der Radfrequenz enthalten. Insbesondere für den Frequenzbereich der Rauschfrequenzen und Störfrequenzen ist dies erfindungsgemäß vorgesehen. Der Vorteil, Nullstellen oder Unendlichkeitsstellen zu verwenden, liegt darin, dass hierdurch benachbarte Frequenzbereiche in ihrer Phasenlage weniger beeinflusst werden. Es ist erfinderisch, dass die die Filter mit Differenzierer und/oder Integrator oder die kombinierten Differenzierer-Filter und/oder Integratorfilter Signale ausprägen, die nahezu keine Rausch- und oder Störanteile enthalten beziehungsweise (kontinuierlich anliegende) Störungen und Rauschen hinsichtlich der Amplitude effektiv unterdrücken. Es ist weiterhin erfindersich dass die Filter Signale ausprägen, bei denen definierbare Frequenzen komplett ausgeblendet werden, zum Beispiel unter Verwendung von Null- oder Unendlichkeitsstellen. Im Sinne der Erfindung prägen die genannten Filter Signale aus, die nahezu keine Rausch- und oder Störanteile enthalten beziehungsweise (kontinuierlich anliegende) Störungen und Rauschen hinsichtlich der Amplitude effektiv unterdrücken. Weiterhin erfinderisch prägen die Filter Signale aus, die auf kontinuierliche oder diskrete Störungen nur mit einer begrenzten (zeitlich kurz und amplitudenmäßig kleinen) Abweichung reagieren.

Im Sinne der Erfindung ist es erfinderisch, dass dass die mit Differenzierer und/oder Integrator oder die kombinierten Differenzierer-Filter und/oder Integratorfilter Anteile von einer oder mehreren Koordinatentransformationen enthalten, um so Geschwindigkeiten an spezifizierten Orten (zum Beispiel am Rad oder aber am Dämpfer) zu ermitteln.

Da Störungen in der Regel nicht vermeidbar sind, ist ihr Einfluss aber zumindest so schwach wie möglich zu gestalten. Daher soll nur eine zeitlich kurze und vom Betrag her geringe Störabweichung möglich sein. Bei der Verwendung bei geregelten Dämpfern führt beispielsweise die Straßenbeschaffenheit zu Störungen, so dass zum Beispiel der Einfluss eines Schlaglochs zeitlich begrenzt ausfällt.

Ferner ist in erfindungsgemäßer Ausgestaltung der Erfindung vorgesehen, die Koordinatentransformation mit in die Vorverarbeitung der Regeleinrichtung innerhalb der Filter zu integrieren. Auf diese Weise können beispielsweise vorab in polare Koordinaten gemessene Wege zwischen Aufbau und Rad in Wege beziehungsweise Geschwindigkeiten des Dämpfers umgerechnet werden, die sich auf kartesische Koordinaten beziehen.

Die Erfindung lässt sich wie nachfolgend beschrieben zusammenfassen.
Meist ist die direkte Ermittlung der vertikalen Geschwindigkeiten insbesondere der Relativgeschwindigkeit zwischen Aufbau und Rad über die Differenzierung der Wegsignale als Eingangsgröße für eine Regelung nur suboptimal geeignet.

Ein weiterer Aspekt der Erfindung lässt sich wie nachfolgend beschrieben zusammenfassen. Meist ist die direkte Ermittlung der vertikalen Geschwindigkeiten insbesondere der Aufbaugeschwindigkeit über die Integration der Beschleunigungssignale aus wirtschaftlichen und technischen Gründen sinnvoll, jedoch hat das integrierte Beschleunigungssignal als Eingangsgröße für eine Regelung eine Reihe von Nachteilen.

Es wird daher vorgeschlagen, ein Verfahren zur Signalaufbereitung zu integrieren, um so sowohl Anforderungen an den Regler als auch Streckeneigenschaften und daraus resultierende Ungenauigkeiten und Störungen bereits in das Eingangssignal zu integrieren. Dies kann wie folgt aussehen. Im Regler sollte der Stellbereich des Aktors berücksichtigt werden. Verwendet man beispielsweise elektronisch geregelte Stoßdämpfer, so können diese nur dynamisch und nicht stationär oder quasistationär arbeiten, das heißt es können keine Stützkräfte aufgenommen oder bereitgestellt werden, wie dies zum Beispiel bei Federelementen der Fall ist. Würde man nun als Eingangsgröße ein Signal verwenden, das stationäre Anteile beinhaltet, so würde der Regler mit einer (Strom-)Anforderung darauf reagieren. Entsprechend würde über den Stoßdämpfer zum Beispiel eine Kraft gestellt werden. Diese führt aber nur dazu, dass unnötiger Diskomfort in das Gesamtsystem eingebracht wird oder aber dass andere Anforderungen an den Regler nur noch suboptimal bedient werden.

Wegsignale geben jedoch in der Regel einen Absolutwert des Aufbaus bezüglich des Rades an. Es ergibt sich je nach Massen, Federn und Beladung ein (quasi-)stationärer Wert für das Wegsignal, um den dann die eigentliche Bewegung stattfindet. Die Kenntnis dieses (quasi-)stationären Wertes ist interessant zum Beispiel für die Ermittlung des Beladungszustandes oder die Ermittlung der Gewichtsverteilung zwischen Vorder- und Hinterachse. Das Signal wird quasi-stationär bezeichnet, da es zeitlich langsam veränderlich sein kann. Dies ist beispielsweise der Fall bei einer Bergfahrt, bei der sich die Massenaufteilung zwischen Vorder- und Hinterachse ändert. Bei einer nachfolgenden Differenzierung eines Signals führen stationäre Anteile zu meist relativ langsam abklingenden Abweichungen oder auch Schwebungen um die Nullachse. Diese sind bei der Ermittlung eines Geschwindigkeitssignals unerwünscht. Zielsetzung ist es daher, ein Eingangssignal, das heißt zum Beispiel eine Relativgeschwindigkeit, zu erzeugen, die nur oder vorwiegend Anteile enthält, die auch tatsächlich am Aktor anliegen.

Ähnliches ist im Bereich hoher Frequenzen zu berücksichtigen. Das Eingangssignal sollte keine Anteile enthalten, die der Aktor auf Grund seiner Trägheit nicht mehr stellen kann. Weitere Anforderungen können sein, dass Aktorgeräusche zu vermeiden sind, die bei bestimmten Signalfrequenzen oder Signalformen auftreten können. Diese Aktor-Anforderungen sollten zum Beispiel unter Verwendung von Filtern in das Eingangssignal integriert werden.

Ebenfalls berücksichtigt werden können Signalunterschiede zwischen realer Messstelle und gewünschtem Signalort. Zur Ermittlung der Dämpfergeschwindigkeit steht in den meisten Fällen das Signal eines Niveausensors zur Verfügung, der zwischen Aufbau und Rad angebracht ist. Diese Messkette beinhaltet viele Nichtlinearitäten und Zeitelemente, wie beispielsweise Dämpferlager oder andere Achselastizitäten. Gewünscht ist die Ermittlung der Dämpfergeschwindigkeit, das heißt der Geschwindigkeit, mit der die Kolbenstange ein- und ausfährt. Eigentlich wäre also der Messort entsprechend am Dämpfer selbst zu wählen. Von dieser Variante wird jedoch aus Kosten-, Platz- oder Machbarkeitsgründen meist abgewichen. Zur korrekten Berechnung der Dämpfergeschwindigkeit sind die zusätzlichen Streckeneinflüsse entsprechend herauszurechnen.

Ein weiterer Punkt ist, dass der Wegsensor meist nicht den Dämpferweg misst. Über Filter besteht nun die Möglichkeit, eine Koordinatentransformation auf den gewünschten Ort, zum Beispiel Rad oder aber Dämpfer selbst, zu integrieren.

Des Weiteren kann zum Beispiel das Zeitverhalten des Dämpfers im Geschwindigkeitssignal berücksichtigt werden. Die Kraft, die der Dämpfer aufbringt, wird näherungsweise nach einer Totzeit und einer Zeitverzögerung aufgebracht. Das heißt, die Dämpfergeschwindigkeit kann auch mit diesem Zeitverhalten beaufschlagt werden, da meist die Kraft bezogen auf die dazugehörige Geschwindigkeit von Interesse ist.

Die Aufgabe wird ferner durch ein System zur Beeinflussung der Bewegung eines in seinen Bewegungsabläufen steuerbaren oder regelbaren Fahrzeugaufbaus eines Kraftfahrzeuges mit Sensoren, welche die Bewegung des Fahrzeugaufbaus relativ zu wenigstens drei Fahrzeugrädern erfassen, mit Sensoren, welche die Vertikalbeschleunigung des Fahrzeugaufbaus erfassen, mit steuerbaren oder regelbaren Aktuatoren, insbesondere semi-aktiven oder aktiven Dämpfern, die zwischen dem Fahrzeugaufbau und den Fahrzeugrädern angeordnet sind, mit einem Dämpferregler, mittels dem die Sensorsignale verarbeitet werden und wenigstens ein Ansteuersignal für die Aktuatoren bereitgestellt wird gelöst, wobei dass dem Dämpferregler ein Vorverarbeitungsglied vorgeschaltet oder in diesen integriert ist, mittels dem die Sensorsignale vorverarbeitet werden und unter Berücksichtigung einer gewünschten Bewegungscharakteristik nicht regelungsrelevante Signalinformationen und/oder Signalbearbeitungen herausgefiltert werden.

Erfindungsgemäß umfasst das Vorverarbeitungsglied einen Differenzierer-Filter und/oder einen Integrator-Filter.

Im Sinne der Erfindung ist ein Fahrzeug, insbesondere ein Kraftfahrzeug, mit einem System zur Beeinflussung der Bewegung eines in seinen Bewegungsabläufen steuerbaren oder regelbaren Fahrzeugaufbaus mit einem der genannten Merkmale ausgestattet.

Weitere bevorzugte Ausgestaltungen ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: schematisch ein Kraftfahrzeug mit einer Dämpferregelung;
- Figur 2: eine Prinzipskizze eines Kraftfahrzeuges mit vertikalen Eck-Aufbaugeschwindigkeiten;
- Figur 3: eine Prinzipskizze eines Kraftfahrzeuges mit vertikalen Modal-Aufbaugeschwindigkeiten;
- Figur 4: eine Prinzipskizze eines Kraftfahrzeuges mit im Dämpfersystem angeordneten Sensoren und den resultierenden Rad-, Aufbau- und Dämpfergeschwindigkeiten;
- Figur 5: ein Blockschaltbild eines Standardregelkreises;
- Figur 6: ein Blockschaltbild eines erweiterten Regelkreises;
- Figur 7: ein Blockschaltbild eines erfindungsgemäßen Regelkreises;
- Figur 8: Schaltbilder von Differenzierer und Integrator;
- Figur 9: ein Schaltbild eines Tiefpasses;
- Figuren 10 bis 15: Filteranordnungen mit Differenzierer und
- Figuren 16 bis 21: Filteranordnungen mit Integrator.

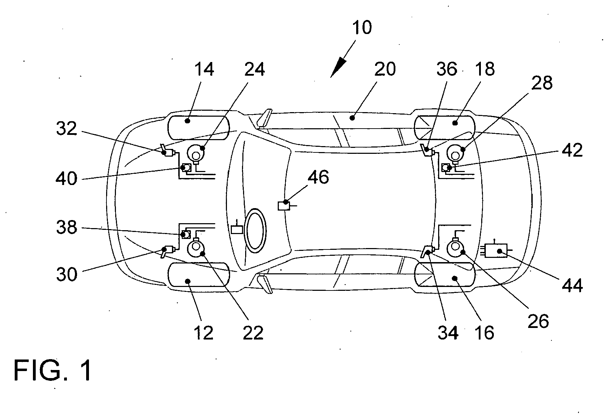

Figur 1 zeigt schematisch in Draufsicht ein insgesamt mit 10 bezeichnetes Kraftfahrzeug. Aufbau und Funktion von Kraftfahrzeugen sind allgemein bekannt, so dass im Rahmen der vorliegenden Beschreibung hierauf nicht näher eingegangen wird.

Das Kraftfahrzeug 10 besitzt vier Räder 12, 14, 16 und 18. Die Räder 12, 14, 16 und 18 sind über eine bekannte Radaufhängung an einem Aufbau 20 des Kraftfahrzeuges 10 befestigt. Unter Aufbau 20 wird im Rahmen der Erfindung allgemein die Fahrzeugkarosserie mit der Fahrgastzelle verstanden. Zwischen den Rädern 12, 14, 16 und 18 einerseits und dem Aufbau 20 ist jeweils ein Dämpfer 22, 24, 26 beziehungsweise 28 angeordnet. Die Dämpfer 22, 24, 26 und 28 sind parallel zu nicht dargestellten Federn angeordnet. Die Dämpfer 22, 24, 26 und 28 sind beispielsweise als semi-aktive Dämpfer ausgebildet, das heißt, durch Anlegen eines Steuersignals an ein Stellmittel der Dämpfer kann die Dämpferkraft variiert werden. Das Stellmittel ist üblicher Weise als elektromagnetisches Ventil ausgebildet, so dass das Stellsignal ein Steuerstrom für das Ventil ist.

Jedem Rad beziehungsweise jedem Dämpfer ist ein Wegsensor 30, 32, 34 beziehungsweise 36 zugeordnet. Die Wegsensoren sind als Relativwegsensoren ausgebildet, das heißt, diese messen eine Veränderung des Abstandes des Aufbaus 20 von dem jeweiligen Rad 12, 14, 16 beziehungsweise 18. Typischerweise werden hier so genannte Drehwinkel-Wegsensoren eingesetzt, deren Aufbau und Funktion allgemein bekannt sind.

Der Aufbau 20 umfasst ferner drei an definierten Punkten angeordnete Vertikalbeschleunigungssensoren 38, 40 und 42. Diese Beschleunigungssensoren 38, 40 und 42 sind fest an dem Aufbau 20 angeordnet und messen die Vertikalbeschleunigung des Aufbaus im Bereich der Räder 12, 14 beziehungsweise 18. Im Bereich des linken hinteren Rades 16 kann die Beschleunigung aus den drei anderen Beschleunigungssensoren rechnerisch ermittelt werden, so dass hier auf die Anordnung eines eigenen Beschleunigungssensors verzichtet werden kann.

Die Anordnung der Sensoren ist hier lediglich beispielhaft. Es können auch andere Sensoranordnungen, beispielsweise ein vertikaler Aufbaubeschleunigungssensor und zwei Drehwinkelsensoren oder dergleichen, zum Einsatz kommen.

Das Kraftfahrzeug 10 umfasst ferner ein Steuergerät 44, das über Signal- beziehungsweise Steuerleitungen mit den Stellmitteln der Dämpfer 22, 24, 26 und 28, den Wegsensoren 30, 32, 34 und 36 und den Beschleunigungssensoren 38, 40 und 42 verbunden ist. Das Steuergerät 44 übernimmt die nachfolgend noch näher zu erläuternde Dämpferregelung. Daneben kann das Steuergerät 44 selbstverständlich auch weitere, hier nicht zu betrachtende Funktionen innerhalb des Kraftfahrzeuges 10 übernehmen. Das Kraftfahrzeug 10 umfasst ferner ein Schaltmittel 46, beispielsweise einen Taster, ein Drehrad oder dergleichen, mittels dem von einem Fahrzeugführer eine Anforderung an die Bewegung des Aufbaus 20 gewählt werden kann. Hier kann beispielsweise zwischen der Anforderung "Komfort", der Anforderung "Sport" und der Anforderung "Basis" gewählt werden. Die Wahl ist entweder stufenförmig zwischen den drei Modi oder stufenlos mit entsprechenden Zwischenmodi möglich.

Das Schaltmittel 46 ist ebenfalls mit dem Steuergerät 44 verbunden.

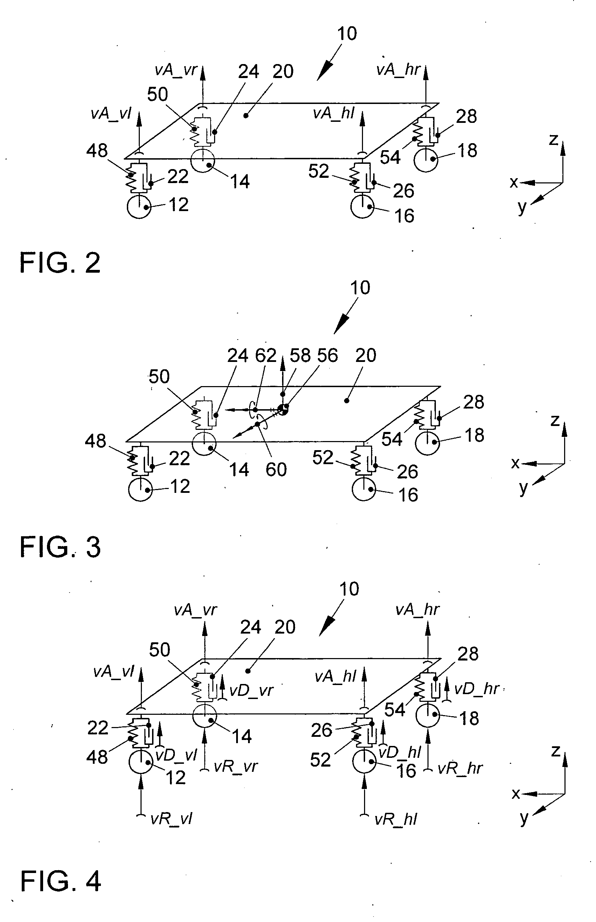

Figur 2 zeigt eine Prinzipskizze des Kraftfahrzeuges 10, wobei hier der Aufbau 20 als ebene Fläche angedeutet ist. An den Ecken des Aufbaus 20 sind jeweils die Räder 12, 14, 16 und 18 über eine Feder-Dämpfer-Kombination in an sich bekannter Art und Weise angeordnet. Die Feder-Dämpfer-Kombination besteht aus den Dämpfern 22, 24, 26 und 28 und jeweils parallel geschalteten Federn 48, 50, 52 und 54. An den Ecken des Aufbaus 20 sind die in Figur 1 dargestellten Beschleunigungssensoren 38, 40 beziehungsweise 42 angeordnet, mittels denen die vertikale Geschwindigkeit an den Ecken des Aufbaus 20 bestimmt werden kann. Hierbei handelt es sich um die Geschwindigkeiten vA_vl (Geschwindigkeit Aufbau vorne links), vA_vr (Geschwindigkeit Aufbau vorne rechts), vA_hl (Geschwindigkeit Aufbau hinten links) und vA_hr (Geschwindigkeit Aufbau hinten rechts). Die Geschwindigkeit kann aus den mittels der Beschleunigungssensoren gemessenen Beschleunigungen durch Integration errechnet werden.

Figur 3 zeigt wiederum die Prinzipskizze des Kraftfahrzeuges 10, wobei gleiche Teile wie in den vorhergehenden Figuren mit gleichen Bezugszeichen versehen und nicht nochmals erläutert sind. In einem Schwerpunkt 56 sind die Modalbewegungen des Aufbaus 20 verdeutlicht. Dies ist einerseits ein Hub 58 in vertikaler Richtung (z-Richtung), ein Nicken 61, das heißt eine Drehbewegung um eine in der y-Achse liegende Querachse, und ein Wanken 63, das heißt eine Drehbewegung um eine in der x-Achse liegende Längsachse des Kraftfahrzeuges 10.

Figur 4 zeigt eine weitere Prinzipskizze des Kraftfahrzeuges 10, wobei hier, in Ergänzung zu der Darstellung in Figur 2, weitere Signale dargestellt sind. Zusätzlich sind hier die Dämpfergeschwindigkeiten vD dargestellt, wobei vD_vl die Dämpfergeschwindigkeit für den Dämpfer 22 (vorne links), vD_vr die Dämpfergeschwindigkeit für den Dämpfer 24 (vorne rechts), vD_hl die Dämpfergeschwindigkeit für den Dämpfer 26 (hinten links) und vD_hr die Dämpfergeschwindigkeit für den Dämpfer 28 (hinten rechts) ist. Die Dämpfergeschwindigkeiten können über eine Differenzierung aus den Signalen der Wegsensoren 30, 32, 34 beziehungsweise 36 (Figur 1) ermittelt werden. In Figur 4 sind ferner die Radgeschwindigkeiten vR angedeutet. Hier steht Geschwindigkeit vR_vl für das Rad 12 (vorne links), vR_vr für das Rad 14 (vorne rechts), vR_hl für das Rad 16 (hinten links) und vR_hr für das Rad 18 (hinten rechts). Die Radgeschwindigkeiten vR können beispielsweise über Radbeschleunigungssensoren ermittelt werden.

Da sowohl die Aufbaugeschwindigkeiten vA, die Dämpfergeschwindigkeiten vD und die Radgeschwindigkeiten vR alle den gleichen Richtungsvektor besitzen (in z-Richtung), besteht der Zusammenhang vD=vA-vR. Hierdurch müssen nicht alle Messgrößen in Form von Messsignalen vorliegen, sondern können aus den anderen Messgrößen errechnet werden.

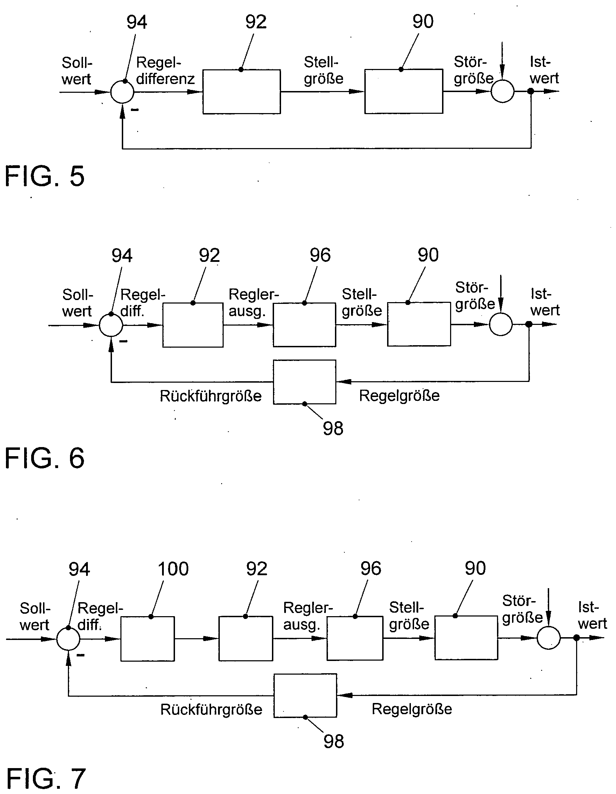

In Figur 5 ist ein Standardregelkreis dargestellt. Dieser besteht aus einer Strecke 90, einem Regler 92 und einer negativen Rückkopplung der Regelgröße, das heißt des Istwertes auf dem Regler 92. Die Regeldifferenz wird aus der Differenz zwischen Sollwert (Führungsgröße) und Regelgröße berechnet. Die Stellgröße wirkt auf die Strecke 90 und damit auf die Regelgröße.

Die Störgröße bewirkt eine, normalerweise unerwünschte, Veränderung der Regelgröße, die kompensiert werden muss. Die Eingangsgröße des Reglers 92 ist die Differenz aus dem gemessenen Istwert der Regelgröße und dem Sollwert. Der Sollwert wird auch als Führungsgröße bezeichnet, dessen Wert durch den gemessenen Istwert nachgebildet werden soll. Da der Istwert durch Störgrößen verändert werden kann, muss der Istwert dem Sollwert nachgeführt werden. Eine in einem Vergleicher 94 festgestellte Abweichung des Istwertes von dem Sollwert, die sogenannte Regeldifferenz, dient als Eingangsgröße für den Regler 92. Durch den Regler 92 wird festgelegt, wie das Regelungssystem auf die festgestellten Abweichungen reagiert, beispielsweise schnell, träge, proportional, integrierend oder dergleichen. Als Ausgangsgröße des Reglers 92 ergibt sich eine Stellgröße, welche auf eine Regelstrecke 90 Einfluss nimmt. Die Regelung dient hauptsächlich zur Beseitigung von Störgrößen, um diese auszuregeln.

In Figur 6 ist eine detailliertere Darstellung des Regelkreises gemäß Figur 5 dargestellt. Es ist ein erweiterter Regelkreis mit den zusätzlichen Elementen Stellglied 96 und Messglied 98 gezeigt. Im Beispiel der erfindungsgemäßen Dämpferregelung setzt sich die Stelleinrichtung beziehungsweise das Stellglied 96 aus einer elektronischen Komponente und einer elektro-hydraulischen Komponente zusammen. Die elektronische Komponente entspricht dem Stromregler im Steuergerät 44, während die elektro-hydraulische Komponente dem elektrisch ansteuerbaren Ventil der Dämpfer 22, 24, 26 beziehungsweise 28 entspricht. In den nachfolgenden Ausführungen sollen diese jedoch nicht weiter betrachtet werden. Diese werden als ideal angenommen beziehungsweise ihr Einfluss wird vernachlässigt. Somit stimmt idealisiert der Reglerausgang, der die Steuergröße liefert, mit der Stellgröße überein oder ist zu dieser zumindest proportional. Der Regler 92 gemäß Figur 5 ist hierbei aufgeteilt in den eigentlichen Regler 92 und das Stellglied 96. Der Regler 92 dient dazu, eine Größe zu bestimmen, mit der auf eine durch den Vergleicher 94 festgestellte Regeldifferenz über das Stellglied 96 reagiert werden soll. Das Stellglied 96 liefert die notwendige Energie in der geeigneten physikalischen Form, um auf den Prozess beziehungsweise die Regelstrecke einzuwirken. In dem Messglied 98 wird der Istwert gemessen. Die Störgröße kann bei einer Regelung der Bewegung eines Fahrzeugaufbaus 20 in Unebenheiten der Fahrbahn, seitlich wirkenden Kräften, wie beispielsweise Wind oder dergleichen, oder ähnlichen Einflüssen begründet sein.

Figur 7 verdeutlicht, dass erfindungsgemäß dem Regler 92 ein Vorverarbeitungsglied 100 vorgeschaltet ist, in dem die Sensorsignale verarbeitet werden, so dass die vorverarbeiteten Sensorsignale am Eingang des Reglers 92 anliegen. Auf Aufbau und Funktion des Vorverarbeitungsgliedes 100 wird nachfolgend näher eingegangen.

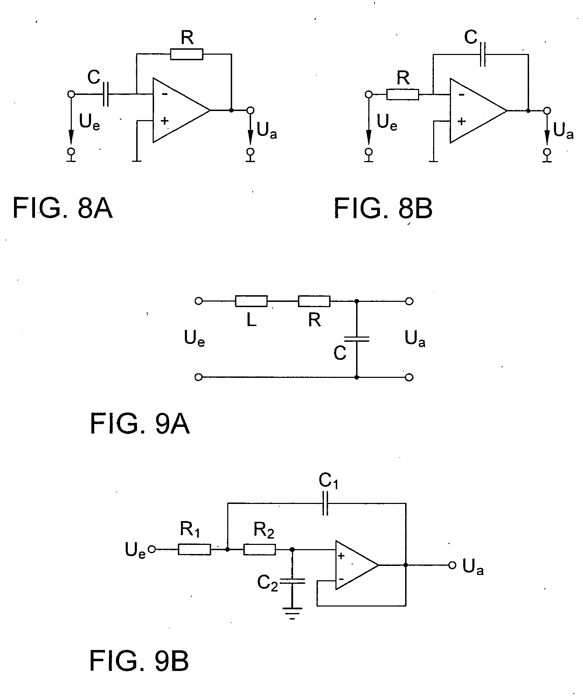

Figur 8A zeigt das Schaltbild eines Differenzierers, wie er in der Erfindung Verwendung finden kann. Dabei wird dem Eingang eines Operationsverstärkers über einen Widerstand R eine Eingangsspannung Ue zugeführt, wobei die Ausgangsspannung Ua über einen Kondensator C an den Eingang des Operationsverstärkers zurückgeführt wird.

Figur 8B zeigt das Schaltbild eines Integrators, wie er in der Erfindung Verwendung finden kann. Dabei wird dem Eingang eines Operationsverstärkers über einen Widerstand R eine Eingangsspannung Ue zugeführt, wobei die Ausgangsspannung Ua über einen Kondensator C an den Eingang des Operationsverstärkers zurückgeführt wird.

Bei dem Differenzierer nach Figur 8A und dem Integrator nach Figur 8B handelt es sich um an sich bekannte Baugruppen, die an dieser Stelle nicht näher beschrieben werden sollen. Einzelheiten hierzu lassen sich beispielsweise dem Taschenbuch der Elektrotechnik und Elektronik, Fachbuchverlag Leipzig, vierte Auflage Seite 466 bis 468 entnehmen. Wesentlich ist, dass sich die Wirkungsweise des Differenzierers und des Integrators auch durch an sich bekannte Software-Maßnahmen verwirklichen lässt, ohne dass hier allerdings der Rahmen der Erfindung verlassen wird.

Als Beispiel für mögliche Ausführungsformen der in der vorliegenden Erfindung verwendeten Filter zeigt in Figur 9 das Schaltbild eines Tiefpasses zweiter Ordnung, wobei Figur 9A eine passiv arbeitende Ausführungsform und Figur 9B eine aktiv arbeitende Ausführungsform darstellt. Es gilt wiederum das im Zusammenhang mit Figur 8 Gesagte, nämlich dass einerseits die Wirkung der in Figur 9 gezeigten Tiefpässe sich mit Software-Maßnahmen nachbilden lässt, hierdurch aber der Rahmen der Erfindung nicht verlassen wird. Da es sich bei den genannten Tiefpässen um an sich bekannte Baugruppen handelt, sollen diese hier nicht näher erläutert werden. Einzelheiten hierzu findet man in der zuletzt genannten Literaturstelle auf den Seiten 472 bis 476. Im Übrigen ist in die Wirkung eines Tiefpasses, zum Beispiel aus Figur 9A, ohne weiteres ersichtlich. Hat die Eingangsspannung Ue eine sehr niedrige Frequenz oder ist stationär, so liegt an den Enden des Kondensators fast die gesamte Eingangsspannung Ue an. Für sehr hohe Frequenzen bildet aber der Kondensator C einen sehr niedrigen Widerstand, so dass die Eingangsspannung fast ausschließlich an der Induktivität L, R abfällt und die Spannung an C sehr klein wird.

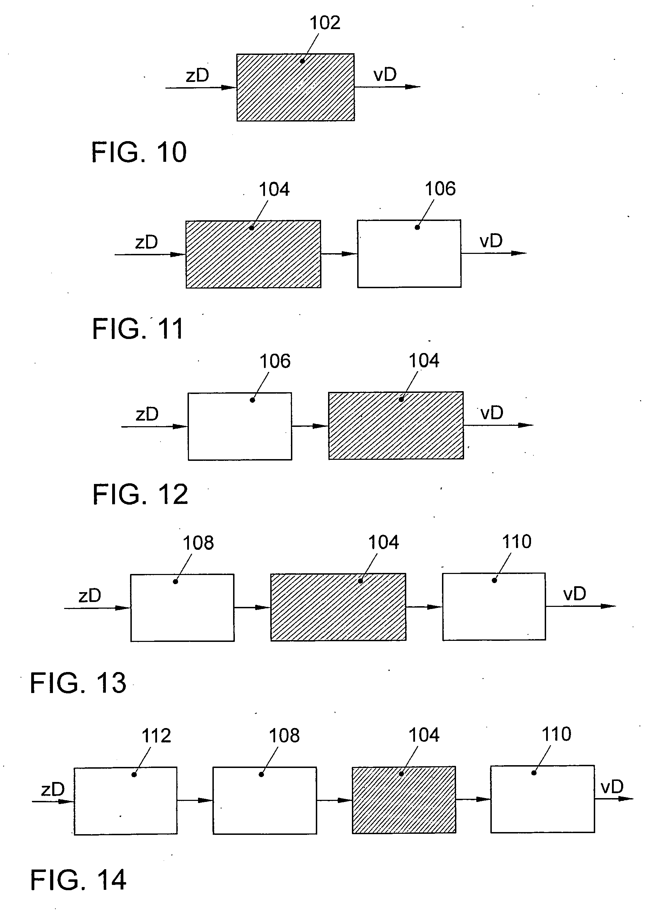

Die Figuren 10 bis 15 zeigen unterschiedliche Anordnungen hinsichtlich der verwendeten Filter (siehe Figur 9) und Differenzierer (siehe Figur 8A) innerhalb des Vorverarbeitungsgliedes 100. Gemäß Figur 10 können Differenzierer und Filter ineinander integriert sein. Das den Weg des Dämpfers beschreibende Signal zD wird durch die Differenzierer/Filter-Kombination 102 umgewandelt in ein die relative Geschwindigkeit des Dämpfers beschreibendes Signal vD. In Figur 11 ist die Differenzierer/Filter-Kombination nach Figur 10 aufgelöst in einen getrennten Differenzierer 104 und einen getrennten Filter 102, die miteinander in Serie geschaltet sind, wobei dem Differenzierer 104 das Signal zD zugeführt wird und von dem Filter 106 das Signal vD abgegriffen werden kann. Figur 12 unterscheidet sich von Figur 11 nur dadurch, dass die Reihenfolge von Filter und Differenzierer miteinander vertauscht ist. In der Regel wird die Anordnung nach Figur 12 bevorzugt, da hier der Differenzierer nicht durch Signalanteile belastet wird, die ohnedies später heraus gefiltert werden.

Eine weitere Möglichkeit besteht gemäß Figur 13 darin, den Filter 106 in einen ersten Filter 108 und einen zweiten Filter 110 aufzuteilen, zwischen denen der Differenzierer 104 angeordnet wird. Eine derartige Anordnung kann beispielsweise zweckmäßig sein, wenn die Filter nichtlinear gestaltet sind. Der vorgeschaltete Filter kann dann dazu eingesetzt werden, dass die Differenzierung numerisch einfacher und genauer wird.

Figur 14 stimmt mit Figur 13 im Wesentlichen überein, nur dass vor den ersten Filter 108 ein Umrechner 112 geschaltet ist, durch welchen beispielsweise eine Koordinatentransformation (z. B. vertikal zu modal) vorgenommen werden kann.

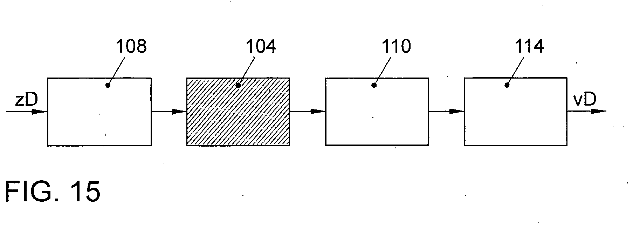

Figur 15 stimmt mit Figur 13 im Wesentlichen überein, nur dass hinter das zweite Filter 110 eine Filter/Regleranforderung 114 geschaltet ist, durch welche bewirkt werden kann, dass eine Ausprägung der Signale für spezielle Regleranforderungen geschaffen wird. So ist es beispielhaft für manche nachgeschaltete Regler vorteilhaft, wenn ein bestimmtes Verhältnis von Aufbau- zu Radfrequenz im Signal enthalten ist.

Ein wichtiges Anwendungsgebiet der vorliegenden Erfindung ist die Regelung der Bewegung des Aufbaus eines Fahrzeugs. Es wird beispielsweise angenommen, dass die Regelung derart geschehen soll, dass die Geschwindigkeit an den Ecken des Aufbaus gegen Null geregelt wird. In diesem Fall ist der Soll-Wert also 0 und der Ist-Wert der Aufbaugeschwindigkeit entspricht der Regeldifferenz. Der Regler 92 gibt in Abhängigkeit von der Regeldifferenz eine Stellgröße aus, mit welcher die Regelstrecke beeinflusst werden kann, indem beispielsweise mittels eines Dämpfers (Aktor) die Kraft eingestellt wird, mit welcher der Dämpfer sich der Bewegung des Aufbaus entgegen stellt. Um den (verstellbaren) Dämpfer verstellen zu können, muss ein (vorzugsweise proportional arbeitendes) Ventil betätigt werden. Hierzu muss der Regler den notwendigen Strom als Stellgröße zur Verfügung stellen.

Bei dem in der vorliegenden Erfindung bevorzugten Beispiel wird nun das Stellglied im Wesentlichen durch eine geregelte Stromquelle in einem Steuergerät, Verbindungskabel und einen Teil des Dämpfers gebildet, welcher das Stromsignal der geregelten Stromquelle aufnimmt. Bei der zu stellenden Größe (Stellgröße) am Ausgang des Stellgliedes, welche die zu regelnde Größe (Regelgröße) beeinflusst, handelt es sich bei dem bevorzugten Beispiel gemäß der Erfindung um die Ventilposition im Dämpfer. In einem semi-aktiven Dämpfer hängt die zur Beruhigung des Aufbaus über den Dämpfer zur Verfügung stehende Kraft von der relativen Geschwindigkeit des Dämpfers und dem Strom ab, mit dem das Ventil des Dämpfers angesteuert wird. Lässt man die Bewegung des Rades außer Acht, so führt eine hohe Geschwindigkeit des Aufbaus zu einem hohen Ausgangssignal des Reglers in Form einer Steuergröße, die in dem Stellglied zu einem entsprechend großen Strom umgesetzt werden kann. Dieser Strom kann beispielsweise in bestimmten Geschwindigkeitsbereichen proportional zur Geschwindigkeit des Aufbaus und/oder des Dämpfers sein, so dass gegen die Bewegung des Aufbaus erhebliche Kräfte wirken, die in der Geschwindigkeit des Aufbaus und/oder des Dämpfers selbst und der entsprechend großen Stellgröße (Strom) begründet sind, durch welches das Ventil sich in Schließrichtung bewegt. Bei einer Kraftanforderung als Reglerausgangsgröße ist ferner die Dämpfergeschwindigkeit notwendig, um in einem Umrechnungsschritt aus der Kraft und der Geschwindigkeit über eine Kennfeldauswertung einen Stellstrom zu ermitteln.

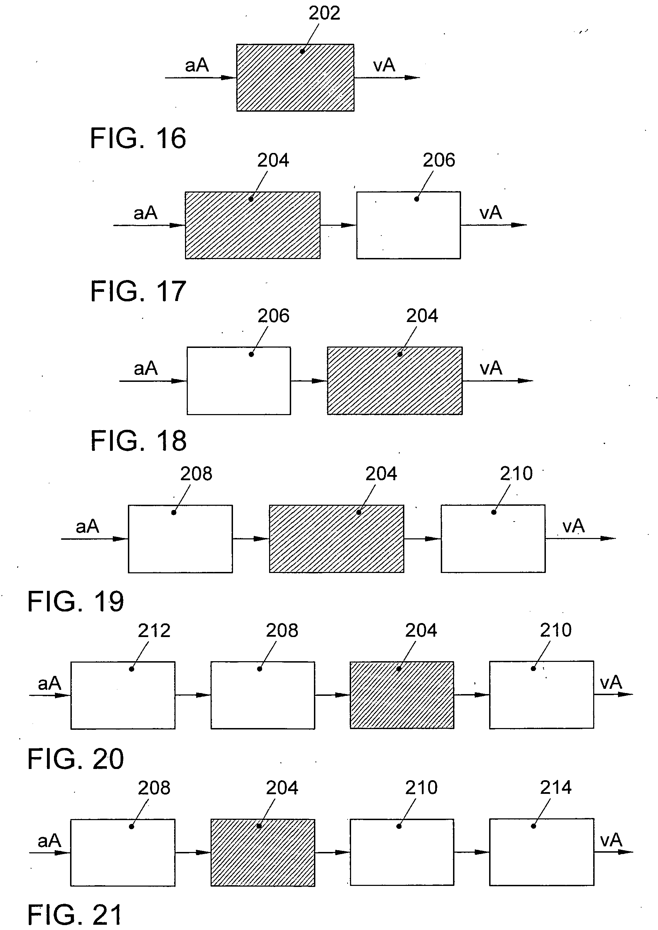

Die Figuren 16 bis 21 zeigen unterschiedliche Anordnungen hinsichtlich der verwendeten Filter (siehe Figur 9) und Integratoren (siehe Figur 8B) innerhalb des Vorverarbeitungsgliedes 100. Gemäß Figur 16 können Integrator und Filter ineinander integriert sein. Das die Beschleunigung des Aufbaus beschreibende Signal aA wird durch die Integrator/Filter-Kombination 202 umgewandelt in ein die Geschwindigkeit des Aufbaus beschreibendes Signal vA. In Figur 17 ist die Integrator/Filter-Kombination 202 nach Figur 16 aufgelöst in einen getrennten Integrator 204 und einen getrennten Filter 206, die miteinander in Serie geschaltet sind, wobei dem Integrator 204 das Signal aA zugeführt wird und von dem Filter 206 das Signal vA abgegriffen werden kann. Figur 18 unterscheidet sich von Figur 17 nur dadurch, dass die Reihenfolge von Filter und Integrator miteinander vertauscht ist. In der Regel wird die Anordnung nach Figur 18 bevorzugt, da hier der Integrator nicht durch Signalanteile belastet wird, die ohnedies später heraus gefiltert werden.

Eine weitere Möglichkeit besteht gemäß Figur 19 darin, den Filter 206 in einen ersten Filter 208 und einen zweiten Filter 210 aufzuteilen, zwischen denen der Integrator 204 angeordnet wird. Eine derartige Anordnung kann beispielsweise zweckmäßig sein, wenn die Filter nichtlinear gestaltet sind. Der vorgeschaltete Filter kann dann dazu eingesetzt werden, dass die Integration numerisch einfacher und genauer wird.

Figur 20 stimmt mit Figur 19 im Wesentlichen überein, nur dass vor den ersten Filter 208 ein Umrechner 212 geschaltet ist, durch welchen beispielsweise eine Koordinatentransformation (z. B. vertikal zu modal) vorgenommen werden kann.

Figur 21 stimmt mit Figur 19 im Wesentlichen überein, nur dass hinter das zweite Filter 210 eine Filter/Regleranforderung 214 geschaltet ist, durch welche bewirkt werden kann, dass eine Ausprägung der Signale für spezielle Regleranforderungen geschaffen wird. So ist es beispielhaft für die Vertikaldynamik vorteilhaft, wenn möglichst wenige Radfrequenzanteile im Signal enthalten sind.

Die Erfindung betrifft also eine Einrichtung, ein Verfahren oder Regelungssystemkomponente zur Berechnung einer Geschwindigkeit (beispielhaft vD) aus einem Wegsignal (beispielhaft zD), bzw. eine Einrichtung, ein Verfahren oder Regelungssystemkomponente zur Berechnung einer Geschwindigkeit(beispielhaft vA) aus einem Beschleunigungssignal (beispielhaft aA).

### Bezugszeichenliste

- 10: Kraftfahrzeug
- 12: Rad
- 14: Rad
- 16: Rad
- 18: Rad
- 20: Aufbau
- 22: Dämpfer
- 24: Dämpfer
- 26: Dämpfer
- 28: Dämpfer
- 30: Wegsensor
- 32: Wegsensor
- 34: Wegsensor
- 36: Wegsensor
- 38: Beschleunigungssensoren
- 40: Beschleunigungssensoren
- 42: Beschleunigungssensoren
- 44: Steuergerät
- 46: Schaltmittel
- 48: Feder
- 50: Feder
- 52: Feder
- 54: Feder
- 56: Schwerpunkt
- 58: Hub
- 60: Nicken
- 62: Wanken
- 90: Strecke
- 92: Regler
- 94: Vergleicher
- 96: Stellglied
- 98: Messglied
- 100: Vorverarbeitungsglied
- 102: Differenzierer/Filter-Kombination
- 104: Differenzierer
- 106: Filter
- 108: erster Filter
- 110: zweiter Filter
- 112: Umrechner
- 114: Filter/Regleranforderung
- 202: Integrator/Filter-Kombination
- 204: Integrator
- 206: getrennter Filter
- 208: erster Filter
- 210: zweiter Filter
- 212: Umrechner
- 214: Filter/Regleranforderung

## Patentansprüche

1. Verfahren zur Erzeugung von Signalen zur Beeinflussung der Bewegung eines in seinen Bewegungsabläufen steuerbaren oder regelbaren Fahrzeugaufbaus eines Kraftfahrzeuges, wobei sensorisch die Bewegung des Fahrzeugaufbaus ermittelt wird, die den ermittelten Sensorwerten entsprechenden Sensorsignale einem Dämpferregler zugeführt werden und der Dämpferregler wenigstens ein Steuersignal zur Ansteuerung von Aktuatoren, insbesondere semi-aktiven oder aktiven Dämpfern, liefert, mittels denen die Bewegung des Fahrzeugaufbaus beeinflusst werden kann, die Sensorsignale in Abhängigkeit einer gewünschten Bewegungscharakteristik des Fahrzeugaufbaus vorverarbeitet werden und die vorverarbeiteten Sensorsignale dem Dämpfungsregler zugeführt werden, wobei nicht regelungsrelevante Signalinformationen und/oder Signalbearbeitungen herausgefiltert werden, **dadurch gekennzeichnet, dass** ein Differenzierer (104) und/oder ein Integrator (204) und mindestens ein Filter (106, 108, 110, 206, 208, 210) oder ein kombiniertes Differenzierer-Filter (102) und/oder ein kombiniertes Integrationsfilter (202) verwendet wird, wobei die Filter (106, 108, 110, 206, 208, 210) derart gestaltet sind, dass zusätzlich Kundenansprüche (zum Beispiel hinsichtlich Komfort oder Sportlichkeit) im Filterdesign berücksichtigt werden, die Filter (106, 108, 110, 206, 208, 210) mit Differenzierer oder Integrator oder die kombinierten Differenzierer-Filter (102) und/oder Integratorfilter (202) Signale ausprägen, die in definierbaren Frequenzen Phasenverschiebungen in Form von Phasenvor- oder Phasennacheilen gegenüber dem Eingangssignal aufweisen.

2. Verfahren nach Anspruch 1, **dadurch gekennzeichnet, dass** Anforderungen an das Reglerverhalten eines nachgeschalteten Reglers (92) im Filterdesign berücksichtigt werden beziehungsweise diese Reglerstrukturen in den Filterblock vorverlegt werden, so dass eine der Filterung nachfolgende lineare oder nichtlineare Regelung bereits Eingangssignale erhält mit spezifischen Eigenschaften und die Regleranforderung damit ohne zusätzliche Reglerstrukturen bedient wird.

3. Verfahren nach einem der vorhergehenden Ansprüche, **dadurch gekennzeichnet, dass** der Aktorstellbereich, hinsichtlich Amplituden-, Zeit- und Frequenzbereich, derart bei der Vorverarbeitung der Sensorsignale berücksichtigt wird, dass die nachfolgenden Regleranforderungen mit diesen im Filter (106, 108, 110, 206, 208, 210) berechneten Eingangssignalen vorwiegend Anteile enthalten, welche vom Aktor in seinem Arbeitsbereich bedient werden können.

4. Verfahren nach einem der vorhergehenden Ansprüche, **dadurch gekennzeichnet, dass** die Filter (102, 104, 16, 202, 204, 206) mit Differenzierer und/oder Integrator oder die kombinierten Differenzierer-Filter (102) und/oder Integratorfilter (202) Signale ausprägen, die keine stationären, quasistationären oder durch stationäre Wege bzw. stationäre Beschleunigungen hervorgerufenen linear ansteigenden oder abfallenden Anteile enthalten, zum Beispiel unter Verwendung von Hochpassfiltern.

5. Verfahren nach einem der vorhergehenden Ansprüche, **dadurch gekennzeichnet, dass** die Filter (102, 104, 16, 202, 204, 206) mit Differenzierer und/oder Integrator oder die kombinierten Differenzierer-Filter (102) und/oder Integratorfilter (202) Signale ausprägen, die vorwiegend Anteile aus dem Aktor-Frequenzbereich enthalten.

6. Verfahren nach einem der vorhergehenden Ansprüche, **dadurch gekennzeichnet, dass** die Filter (102, 104, 16, 202, 204, 206) mit Differenzierer und/oder Integrator oder die kombinierten Differenzierer-Filter (102) und/oder Integratorfilter (202) Signale ausprägen, die vorwiegend Anteile aus dem Aufbau-Frequenzbereich enthalten

7. Verfahren nach einem der vorhergehenden Ansprüche, **dadurch gekennzeichnet, dass** die Filter (102, 104, 16, 202, 204, 206) mit Differenzierer und/oder Integrator oder die kombinierten Differenzierer-Filter (102) und/oder Integratorfilter (202) Signale ausprägen, die einen definierbaren Phasenvorhalt aufweisen, somit das Geschwindigkeitssignal zeitlich früher einsetzt und auf diese Weise zum Beispiel das Zeitverhalten des Aktors berücksichtigt oder im Geschwindigkeitssignale nachgebildet wird.

8. Verfahren nach einem der vorhergehenden Ansprüche, **dadurch gekennzeichnet, dass** die Filter (102, 104, 16, 202, 204, 206) mit Differenzierer und/oder Integrator oder die kombinierten Differenzierer-Filter (102) und/oder Integratorfilter (202) Signale ausprägen, die eine definierbare Phasenkorrektur und/oder eine Amplitudenkorrektur aufweisen, somit das Geschwindigkeitssignal zeitlich verändert einsetzt bzw. in der Amplitude korrigiert ist und auf diese Weise Nichtlinearitäten und/oder Zeitverzüge in der Messkette oder der Strecke näherungsweise berücksichtigt und in ihren Auswirkungen minimiert werden.

9. Verfahren nach einem der vorhergehenden Ansprüche, **dadurch gekennzeichnet, dass** die Filter (102, 104, 16, 202, 204, 206) mit Differenzierer und/oder Integrator oder die kombinierten Differenzierer-Filter (102) und/oder Integratorfilter (202) Signale ausprägen, bei denen Anteile aus definierbaren Frequenzbereichen stark erniedrigt werden, zum Beispiel unter Verwendung eines Bandpasses oder Bandstopfilters.

10. Verfahren nach einem der vorgehenden Ansprüche, **dadurch gekennzeichnet, dass** die Filter (102, 104, 16, 202, 204, 206) mit Differenzierer und/oder Integrator oder die kombinierten Differenzierer-Filter (102) und/oder Integratorfilter (202) Signale ausprägen, die nur sehr geringe Anteile hoher Frequenzen, das heißt Frequenzen deutlich größer als die Radeigenfrequenz, enthalten.

11. Verfahren nach einem der vorhergehenden Ansprüche, **dadurch gekennzeichnet, dass** die Filter (102, 104, 16, 202, 204, 206) mit Differenzierer und/oder Integrator oder die kombinierten Differenzierer-Filter (102) und/oder Integratorfilter (202) Signale ausprägen, die nur sehr geringe Anteile der Radfrequenz enthalten.

12. Verfahren nach einem der vorhergehenden Ansprüche, **dadurch gekennzeichnet, dass** die Filter (102, 104, 16, 202, 204, 206) mit Differenzierer und/oder Integrator oder die kombinierten Differenzierer-Filter (102) und/oder Integratorfilter (202) Signale ausprägen, die nahezu keine Anteile aus dem Radfrequenzbereich enthalten.

13. System zur Beeinflussung der Bewegung eines in seinen Bewegungsabläufen steuerbaren oder regelbaren Fahrzeugaufbaus eines Kraftfahrzeuges, mit Sensoren, welche die Bewegung des Fahrzeugaufbaus relativ zu wenigstens drei Fahrzeugrädern erfassen, mit Sensoren, welche die Vertikalbeschleunigung des Fahrzeugaufbaus erfassen, mit steuerbaren oder regelbaren Aktuatoren, insbesondere semi-aktiven oder aktiven Dämpfern, die zwischen dem Fahrzeugaufbau und den Fahrzeugrädern angeordnet sind, mit einem Dämpferregler, mittels dem die Sensorsignale verarbeitet werden und wenigstens ein Ansteuersignal für die Aktuatoren bereitgestellt wird, **dadurch gekennzeichnet, dass** dem Dämpferregler ein Vorverarbeitungsglied (100) vorgeschaltet oder in diesen integriert ist, mittels dem die Sensorsignale vorverarbeitet werden und unter Berücksichtigung einer gewünschten Bewegungscharakteristik nicht regelungsrelevante Signalinformationen und/oder Signalbearbeitungen herausgefiltert werden, dass ein Differenzierer (104) und/oder ein Integrator (204) und mindestens ein Filter (106, 108, 110, 206, 208, 210) oder ein kombiniertes Differenzierer-Filter (102) und/oder ein kombiniertes Integrationsfilter (202) verwendet wird, wobei die Filter (106, 108, 110, 206, 208, 210) derart gestaltet sind, dass zusätzlich Kundenansprüche (zum Beispiel hinsichtlich Komfort oder Sportlichkeit) im Filterdesign berücksichtigt werden, die Filter (106, 108, 110, 206, 208, 210) mit Differenzierer oder Integrator oder die kombinierten Differenzierer-Filter (102) und/oder Integratorfilter (202) Signale ausprägen, die in definierbaren Frequenzen Phasenverschiebungen in Form von Phasenvor- oder Phasennacheilen gegenüber dem Eingangssignal aufweisen.

## Claims

1. Method for generating signals for influencing the movement of a vehicle body, whose movement sequences can be open-loop or closed-loop controlled, of a motor vehicle, wherein the movement of the vehicle body is determined by sensor, the sensor signals corresponding to the determined sensor values are fed to a shock absorber controller, and the shock absorber controller supplies at least one control signal for actuating actuators, in particular semi-active or active shock absorbers, by means of which the movement of the vehicle body can be influenced, the sensor signals are pre-processed depending on a desired movement characteristic of the vehicle body and the pre-processed sensor signals are fed to the shock absorber controller, wherein non-control-relevant signal information and/or signal processing operations are filtered out, **characterized in that** a differentiator (104) and/or an integrator (204) and at least one filter (106, 108, 110, 206, 208, 210) or a combined differentiator filter (102) and/or a combined integration filter (202) is used, wherein the filters (106, 108, 110, 206, 208, 210) are designed in such a way that customer demands (for example with respect to comfort or sportiness) are also taken into account in the filter design, the filters (106, 108, 110, 206, 208, 210) with differentiator or integrator or the combined differentiator filters (102) and/or integrator filters (202) form signals, which, in definable frequencies, have phase shifts in the form of phase leads or phase lags with respect to the input signal.

2. Method according to Claim 1, **characterized in that** demands on the controller behaviour of a downstream controller (92) are taken into account in the filter design or these controller structures are brought forward into the filter block so that linear or nonlinear control following the filtering even receives input signals with specific properties and the controller demand is therefore operated without additional controller structures.

3. Method according to either of the preceding claims, **characterized in that** the actuator actuating range, with respect to amplitude, time and frequency ranges, is taken into account in the pre-processing of the sensor signals in such a way that the subsequent controller demands with said input signals calculated in the filter (106, 108, 110, 206, 208, 210) predominantly obtain components, which can be operated by the actuator in the working range thereof.

4. Method according to one of the preceding claims, **characterized in that** the filters (102, 104, 16, 202, 204, 206) with differentiator and/or integrator or the combined differentiator filters (102) and/or integrator filters (202) form signals, which do not contain stationary components, quasi-stationary components or components that rise or fall linearly caused by stationary paths or stationary accelerations, for example using high-pass filters.

5. Method according to one of the preceding claims, **characterized in that** the filters (102, 104, 16, 202, 204, 206) with differentiator and/or integrator or the combined differentiator filters (102) and/or integrator filters (202) form signals, which predominantly contain components from the actuator frequency range.

6. Method according to one of the preceding claims, **characterized in that** the filters (102, 104, 16, 202, 204, 206) with differentiator and/or integrator or the combined differentiator filters (102) and/or integrator filters (202) form signals, which predominantly contain components from the body frequency range.

7. Method according to one of the preceding claims, **characterized in that** the filters (102, 104, 16, 202, 204, 206) with differentiator and/or integrator or the combined differentiator filters (102) and/or integrator filters (202) form signals, which have a definable phase lead, therefore the speed signal commences at an earlier time and, in this way, the timing response of the actuator is taken into account or is reproduced in the speed signals, for example.

8. Method according to one of the preceding claims, **characterized in that** the filters (102, 104, 16, 202, 204, 206) with differentiator and/or integrator or the combined differentiator filters (102) and/or integrator filters (202) form signals, which have a definable phase correction and/or an amplitude correction, therefore the speed signal commences at a different time or the amplitude thereof is corrected and, in this way, non-linearities and/or time delays in the measurement chain or the path are approximately taken into account and the effects thereof are minimized.

9. Method according to one of the preceding claims, **characterized in that** the filters (102, 104, 16, 202, 204, 206) with differentiator and/or integrator or the combined differentiator filters (102) and/or integrator filters (202) form signals, in which components from definable frequency ranges are greatly lowered, for example using a bandpass or band-stop filter.

10. Method according to one of the preceding claims, **characterized in that** the filters (102, 104, 16, 202, 204, 206) with differentiator and/or integrator or the combined differentiator filters (102) and/or integrator filters (202) form signals, which contain only very low components of high frequencies, that is to say frequencies significantly greater than the natural frequency of the wheels.

11. Method according to one of the preceding claims, **characterized in that** the filters (102, 104, 16, 202, 204, 206) with differentiator and/or integrator or the combined differentiator filters (102) and/or integrator filters (202) form signals, which contain only very low components of the wheel frequency.

12. Method according to one of the preceding claims, **characterized in that** the filters (102, 104, 16, 202, 204, 206) with differentiator and/or integrator or the combined differentiator filters (102) and/or integrator filters (202) form signals, which contain virtually no components from the wheel frequency range.

13. System for influencing the movement of a vehicle body, whose movement sequences can be open-loop or closed-loop controlled, of a motor vehicle, having sensors, which detect the movement of the vehicle body relative to at least three vehicle wheels, having sensors, which detect the vertical acceleration of the vehicle body, having actuators that can be open-loop or closed-loop controlled, in particular semi-active or active shock absorbers, which are arranged between the vehicle body and the vehicle wheels, having a shock absorber controller, by means of which the sensor signals are processed and at least one actuation signal for the actuators is provided, **characterized in that** a pre-processing element (100) is connected upstream of the shock absorber controller or is integrated therein, by means of which pre-processing element the sensor signals are pre-processed and non-control-relevant signal information and/or signal processing operations are filtered out taking into account a desired movement characteristic, **in that** a differentiator (104) and/or an integrator (204) and at least one filter (106, 108, 110, 206, 208, 210) or a combined differentiator filter (102) and/or a combined integration filter (202) is used, wherein the filters (106, 108, 110, 206, 208, 210) are designed in such a way that customer demands (for example with respect to comfort or sportiness) are also taken into account in the filter design, the filters (106, 108, 110, 206, 208, 210) with differentiator or integrator or the combined differentiator filters (102) and/or integrator filters (202) form signals, which, in definable frequencies, have phase shifts in the form of phase leads or phase lags with respect to the input signal.

## Revendications

1. Procédé de génération de signaux pour influencer le mouvement d'une carrosserie de véhicule d'un véhicule automobile dont les déroulements de mouvement peuvent être commandés ou régulés, le mouvement de la carrosserie de véhicule pouvant être déterminé par des capteurs, les signaux de capteur correspondant aux valeurs de capteur déterminées étant acheminés à un régulateur d'amortisseur et le régulateur d'amortisseur fournissant au moins un signal de commande pour commander des actionneurs, en particulier des amortisseurs semi-actifs ou actifs, au moyen desquels le mouvement de la carrosserie de véhicule peut être influencé, les signaux de capteur étant prétraités en fonction d'une caractéristique de mouvement souhaitée de la carrosserie de véhicule et les signaux de capteur prétraités étant acheminés au régulateur d'amortissement, les informations de signaux et/ou les traitements de signaux non pertinents du point de vue de la régulation étant éliminés par filtrage,
**caractérisé en ce qu'**un différenciateur (104) et/ou un intégrateur (204) et au moins un filtre (106, 108, 110, 206, 208, 210) ou un filtre différenciateur combiné (102) et/ou un filtre intégrateur combiné (202) sont utilisés, les filtres (106, 108, 110, 206, 208, 210) étant configurés de telle sorte que des demandes supplémentaires des clients (par exemple en rapport avec le confort ou le sport) soient prises en compte dans la conception des filtres, les filtres (106, 108, 110, 206, 208, 210) avec différenciateur ou intégrateur, ou les filtres différenciateurs combinés (102) et/ou les filtres intégrateurs combinés (202) formant des signaux qui présentent, dans des fréquences définissables, des déphasages sous forme d'avances de phase ou de retards de phase par rapport au signal d'entrée.

2. Procédé selon la revendication 1, **caractérisé en ce que** des demandes en matière de comportement de régulateur d'un régulateur monté en aval (92) sont prises en compte dans la conception du filtre ou ces structures de régulateur sont préalablement incorporées dans le bloc de filtre de telle sorte qu'une régulation linéaire ou non linéaire ultérieure à la filtration reçoive déjà des signaux d'entrée avec des propriétés spécifiques et de ce fait la demande en matière de régulation est exécutée sans structures de régulateur supplémentaires.

3. Procédé selon l'une quelconque des revendications précédentes, **caractérisé en ce que** la plage de commande de l'actionneur, en rapport avec la plage d'amplitudes, la plage temporelle et la plage de fréquences, est prise en compte lors du prétraitement des signaux de capteur de telle sorte que les demandes de régulateur ultérieures avec ces signaux d'entrée calculés dans le filtre (106, 108, 110, 206, 208, 210) contiennent essentiellement des parties qui peuvent être exécutées par l'actionneur dans sa plage de travail.

4. Procédé selon l'une quelconque des revendications précédentes, **caractérisé en ce que** les filtres (102, 104, 16, 202, 204, 206) avec différenciateur et/ou intégrateur ou les filtres différenciateurs combinés (102) et/ou les filtres intégrateurs combinés (202) forment des signaux qui ne contiennent pas de parties augmentant ou diminuant linéairement, stationnaires, quasi-stationnaires ou provoquées par des moyens stationnaires ou des accélérations stationnaires, par exemple en utilisant des filtres passe-haut.

5. Procédé selon l'une quelconque des revendications précédentes, **caractérisé en ce que** les filtres (102, 104, 16, 202, 204, 206) avec différenciateur et/ou intégrateur ou les filtres différenciateurs combinés (102) et/ou les filtres intégrateurs combinés (202) forment des signaux qui contiennent essentiellement des parties issues de la plage de fréquences de l'actionneur.

6. Procédé selon l'une quelconque des revendications précédentes, **caractérisé en ce que** les filtres (102, 104, 16, 202, 204, 206) avec différenciateur et/ou intégrateur ou les filtres différenciateurs combinés (102) et/ou les filtres intégrateurs combinés (202) forment des signaux qui contiennent essentiellement des parties issues de la plage de fréquences de la carrosserie.

7. Procédé selon l'une quelconque des revendications précédentes, **caractérisé en ce que** les filtres (102, 104, 16, 202, 204, 206) avec différenciateur et/ou intégrateur ou les filtres différenciateurs combinés (102) et/ou les filtres intégrateurs combinés (202) forment des signaux qui présentent une avance de phase définissable, de sorte que le signal de vitesse est utilisé plus tôt et que de cette manière par exemple le temps de réponse de l'actionneur est pris en compte ou est reproduit dans les signaux de vitesse.

8. Procédé selon l'une quelconque des revendications précédentes, **caractérisé en ce que** les filtres (102, 104, 16, 202, 204, 206) avec différenciateur et/ou intégrateur ou les filtres différenciateurs combinés (102) et/ou les filtres intégrateurs combinés (202) forment des signaux qui présentent une correction de phase définissable et/ou une correction d'amplitude, de sorte que le signal de vitesse est utilisé de manière modifiée temporellement ou est corrigé en amplitude et que de cette manière des défauts de linéarité et/ou des retards dans le temps dans la chaîne de mesure ou de la séquence sont approximativement pris en compte et que leurs effets sont minimisés.

9. Procédé selon l'une quelconque des revendications précédentes, **caractérisé en ce que** les filtres (102, 104, 16, 202, 204, 206) avec différenciateur et/ou intégrateur ou les filtres différenciateurs combinés (102) et/ou les filtres intégrateurs combinés (202) forment des signaux dont les parties issues de plages de fréquences prédéfinissables peuvent être fortement réduites, par exemple en utilisant un filtre passe-bande ou un filtre coupe-bande.

10. Procédé selon l'une quelconque des revendications précédentes, **caractérisé en ce que** les filtres (102, 104, 16, 202, 204, 206) avec différenciateur et/ou intégrateur ou les filtres différenciateurs combinés (102) et/ou les filtres intégrateurs combinés (202) forment des signaux qui contiennent seulement de très faibles parties à fréquences élevées, c'est-à-dire des fréquences nettement supérieures à la fréquence propre des roues.

11. Procédé selon l'une quelconque des revendications précédentes, **caractérisé en ce que** les filtres (102, 104, 16, 202, 204, 206) avec différenciateur et/ou intégrateur ou les filtres différenciateurs combinés (102) et/ou les filtres intégrateurs combinés (202) forment des signaux qui contiennent seulement de très petites parties de la fréquence des roues.

12. Procédé selon l'une quelconque des revendications précédentes, **caractérisé en ce que** les filtres (102, 104, 16, 202, 204, 206) avec différenciateur et/ou intégrateur ou les filtres différenciateurs combinés (102) et/ou les filtres intégrateurs combinés (202) forment des signaux qui ne contiennent pratiquement aucune partie issue de la plage de fréquences des roues.

13. Système pour influencer le mouvement d'une carrosserie de véhicule d'un véhicule automobile dont les déroulements de mouvement peuvent être commandés ou régulés, comprenant des capteurs qui détectent le mouvement de la carrosserie de véhicule par rapport à au moins trois roues du véhicule, comprenant des capteurs qui détectent l'accélération verticale de la carrosserie du véhicule, comprenant des actionneurs commandables ou réglables, en particulier des amortisseurs semi-actifs ou actifs, qui sont disposés entre la carrosserie de véhicule et les roues du véhicule, comprenant un régulateur d'amortisseur au moyen duquel les signaux de capteur sont traités et au moins un signal de commande pour les actionneurs est fourni, **caractérisé en ce qu'**un organe de prétraitement (100) est monté en amont du régulateur d'amortisseur ou est intégré dans celui-ci, au moyen duquel les signaux de capteur sont prétraités et en tenant compte d'une caractéristique de mouvement souhaitée, les informations de signaux et/ou les traitements de signaux non pertinents pour le réglage étant éliminés par filtrage, **en ce qu'**un différenciateur (104) et/ou un intégrateur (204) et au moins un filtre (106, 108, 110, 206, 208, 210) ou un filtre différenciateur combiné (102) et/ou un filtre intégrateur combiné (202) sont utilisés, les filtres (106, 108, 110, 206, 208, 210) étant configurés de telle sorte que des demandes supplémentaires des clients (par exemple en rapport avec le confort ou le sport) soient prises en compte dans la conception des filtres, les filtres (106, 108, 110, 206, 208, 210) avec différenciateur ou intégrateur, ou les filtres différenciateurs combinés (102) et/ou les filtres intégrateurs combinés (202) formant des signaux qui présentent, dans des fréquences définissables, des déphasages sous forme d'avances de phase ou de retards de phase par rapport au signal d'entrée.
